(19) Europäisches Patentamt
European Patent Office
Office européen des brevets

(11) **EP 4 304 074 A1**

(12) **EUROPEAN PATENT APPLICATION**

(43) Date of publication:
**10.01.2024 Bulletin 2024/02**

(21) Application number: **23176517.3**

(22) Date of filing: **31.05.2023**

(51) International Patent Classification (IPC):
**H02M 7/49** (2007.01)    **H02M 7/501** (2007.01)
**H02J 1/08** (2006.01)    **H02J 7/04** (2006.01)

(52) Cooperative Patent Classification (CPC):
**H02J 7/0018; H02J 1/08; H02J 7/0068; H02J 7/04;
H02M 1/007; H02M 1/0074; H02M 1/4208;
H02M 3/33561; H02M 3/33573; H02M 7/06;
H02M 7/49;** H02J 2207/20; H02M 1/4258;
H02M 3/01; H02M 3/158

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.06.2022    US 202263347869 P
08.08.2022    US 202263370750 P**

(71) Applicant: **Milwaukee Electric Tool Corporation
Brookfield, WI 53005 (US)**

(72) Inventor: **SWAMY, Mahesh M.
Gurnee 60031 (US)**

(74) Representative: **Forresters IP LLP
Skygarden
Erika-Mann-Straße 11
80636 München (DE)**

(54) **POWER SUPPLY INCLUDING A CASCADED INVERTER**

(57)    A power supply that includes a rectifier, a converter connected to the rectifier, a plurality of battery management system controllers, and a plurality of inverters. The plurality of battery management system controllers are connected to the converter and configured to connect to a plurality of battery packs. Each battery pack is configured to be connected to a dedicated battery management system controller. The plurality of inverters are configured to connect to the plurality of battery packs. Each inverter is configured to connect to one of the plurality of battery packs. A first inverter and a last inverter provide terminals configured to connect to a load. The cascade converter employs a charger that has a high frequency ("hf") isolation transformer with multiple secondary windings with identical number of turns to cater to the charging requirements of multiple battery packs.

FIG. 1A

Processed by Luminess, 75001 PARIS (FR)

EP 4 304 074 A1

**Description**

RELATED APPLICATIONS

This application claims the benefit of U.S. Provisional Patent Application No. 63/347,869, filed June 1, 2022, and U.S. Provisional Patent Application No. 63/370,750, filed August 8, 2022, the entire content of each of which is hereby incorporated by reference.

SUMMARY

Power supplies may include a cascaded inverter. The cascaded inverter may use the same inverter terminals for charging and discharging, unlike traditional techniques for charging the battery packs. One disclosed cascaded inverter provides an alternate port for charging the packs so that the inverter terminals are available to support critical loads, simultaneously. Additionally, the cascade inverter may be configured to charge a plurality of batteries, and may begin a charging process at a battery pack with the lowest state of charge (SOC). An AC source of the inverter may be electrically isolated from the battery pack and the inverter terminals. At the end of the charge cycle, in the proposed topology, all the battery packs are charged up to the same voltage level. In such embodiments, packs with different states of charge (SOC) may be charged simultaneously since the charging process starts with the pack with the lowest SOC.

Embodiments described herein provide a power supply including a rectifier, and a converter connected to the rectifier. A plurality of battery management system controllers are connected to the converter and configured to connect to a plurality of battery packs, and each battery pack is configured to be connected to a dedicated battery management system controller. A plurality of inverters are configured to connect to the plurality of battery packs, with each inverter configured to connect to one of the plurality of battery packs. A first inverter and a last inverter from the plurality of inverters provide terminals configured to connect to a load and power the load while the plurality of battery packs are being charged by the battery management system controllers.

In some aspects, the converter of the power supply includes a high frequency ("HF") isolation transformer, the HF isolation transformer including multiple secondary windings to accommodate charging requirements of a plurality of battery packs.

In some aspects, the converter of the power supply is configured to determine a voltage need of at least one of the plurality of battery packs and increase or decrease a number of turns in a primary winding of the HF isolation transformer of the converter based on the voltage need.

In some aspects, the battery management system controllers of the power supply are configured to determine a lowest charge battery pack from the plurality of battery packs having a lowest state of charge and to begin a cascaded charge at the lowest charge battery pack.

In some aspects, the power supply further includes a boost converter connected to the converter.

In some aspects, the converter of the power supply includes a pulse amplitude modulation inverter.

In some aspects, the inverters of the power supply include two or more stages.

Embodiments described herein provide a method of adaptively charging a plurality of battery packs which includes connecting the plurality of battery packs to a rectifier via a plurality of battery management system controllers, and transmitting, via a high frequency ("HF") isolation transformer of a converter, power from the rectifier to the battery management system controllers. The method also includes adaptively adjusting, via the converter, an initial windings ratio of the HF isolation transformer while charging the plurality of battery packs based on a voltage of a lowest voltage battery pack connected to at least one of the plurality of battery management system controllers such that a the lowest voltage battery pack charges before other battery packs in the plurality of battery packs.

In some aspects, the initial windings ratio of the HF isolation transformer is given by a ratio of a plurality of primary windings to a plurality of secondary winding of the HF isolation transformer and is set based upon a lowest primary voltage need of a market of operation.

In some aspects, the adaptively adjusting the initial windings ratio of the HF transformer includes shorting out a portion of a plurality of the primary windings of the HF isolation transformer.

In some aspects, the initial windings ratio is at least 95:5.

In some aspects, shorting out a portion of the plurality of the primary windings produces an adjusted windings ratio of at least 75:5.

In some aspects, shorting out a portion of the plurality of primary windings of the HF isolation transformer includes closing a bypass contactor.

In some aspects, shorting out a portion of the plurality of primary windings of the HF isolation transformer includes opening a bypass contactor.

In some aspects, shorting out of the portion of the plurality of primary windings occurs when a voltage of the lowest voltage battery pack rises above a threshold.

Before any embodiments are explained in detail, it is to be understood that the embodiments are not limited in application to the details of the configurations and arrangements of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%, or more) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Other aspects of the embodiments will become apparent by consideration of the detailed description and accompanying drawings.

BRIEF DESCRIPTION OF THE DRAWINGS

FIG. 1A illustrates a perspective view of a portable power supply device.

FIG. 1B illustrates a battery pack including a plurality of batteries.

FIG. 1C illustrates a hardware schematic for a power supply including an inverter connected to a battery pack and a controller.

FIG. 2A illustrates a cascaded inverter with two cascade stages.

FIG. 2B illustrates a switching scheme for the cascaded inverter shown in FIG. 2A.

FIG. 3A illustrates a cascaded inverter with six cascade stages.

FIG. 3B illustrates a switching scheme for the cascaded inverter shown in FIG. 3A.

FIG. 4A illustrates a charging scheme for a cascaded inverter with two cascade stages, two output inductors, and a full-wave rectifier.

FIG. 4B illustrates a switching scheme for charging the cascaded inverter with two stages.

FIG. 5A illustrates a charging scheme for a cascaded inverter with n cascade stages, two output inductors, and a full-wave rectifier.

FIG. 5B illustrates a switching scheme for charging the cascaded inverter with n stages.

FIG. 6 illustrates a power flow schematic of a charger for use with a cascaded inverter.

FIG. 7 illustrates a schematic of a charger for use with a cascaded inverter.

FIG. 8A illustrates a schematic of a cascaded inverter charging a plurality of battery packs while the inverter is simultaneously providing power to load in a 120VAC or 230VAC system.

FIG. 8B illustrates a converter as shown in FIG. 8A and configured to change a winding ratio between a primary winding and a secondary winding of a transformer of the converter.

FIG. 9 illustrates a decision loop to enable the winding change of the converter shown in 8B.

## DETAILED DESCRIPTION

Most battery chargers include two stages of power conversion. In the first stage, the input alternating current ("AC") power is converted into a fixed direct current ("DC") bus voltage, often using a power factor correction topology to assure good input power factor and low current harmonics. The output of a boost converter is fixed at some high enough voltage to realize boost operation even under light load conditions. In the second stage, the fixed output voltage from the boost converter is fed into a high frequency Switched Mode Power Supply ("SMPS") transformer to convert the fixed DC voltage to a pulse width modulated AC voltage across the primary of the SMPS transformer. The output of the SMPS transformer is rectified and then fed into the battery to charge it, in either constant current or constant voltage mode, depending on the state of charge ("SOC") of the battery. The output voltage of the SMPS is controlled by controlling the pulse width of the switches in the primary winding of the SMPS transformer. A DC-to-DC converter topology, which has the SMPS transformer for providing isolation and level transformation, may be a full bridge converter, a forward converter, or a resonant converter, depending on the desired power level, cost, and size constraints.

On the other hand, many implementations of cascade inverters use the same inverter switches to charge a depleted battery pack array from the input AC source. If all the battery packs in a cascaded topology are specifically used in a particular platform, all of them will most likely discharge at the same rate. These packs can be charged simultaneously in series using the inverter switches.

Additionally, all the independent battery packs may discharge at the same rate since the inverters are all connected in series. If the starting voltage is the same, then all packs can be considered to be at approximately the same voltage at the end of their discharge cycle. However, cells may have different voltages at the end of discharge due to many reasons. For example, in some cases, some battery packs are swapped when they exhibit thermal issues, certain battery packs were redundant and were sparingly used, or some battery packs at the center of a larger configuration become thermally stressed and are bypassed for a certain length of time, resulting in unequal state of charge (SOC) for these battery packs compared to others in the group, etc.

Low voltage cell packs may be used to produce low voltage AC output. Multiple low voltage inverter outputs may be connected in series to result in a total output AC voltage that matches either a 120VAC application or a 230VAC application, depending on the region of use. Often, inverters connected in series are used as the power port for charging the packs. This makes the inverters behave as bidirectional power converters. Unfortunately, during the charging process, it means that the inverter terminals may not be available to deliver power to additional loads. Additionally, according to the traditional technique, the inverter terminals are directly connected to the AC source when it is being used for charging. Hence, there is no electrical isolation between the input AC source and the battery packs.

A cascaded inverter scheme may use the same inverter section to charge the battery packs in a time multiplexed manner. However, like the traditional technique, this may also disallow a "pass through" use of the inverter output for powering other loads during the charging period. A separate and additional charger may be added to the charging platform in order to support the pass through power feature for powering additional loads during charging. A separate charger may be used to charge the various battery packs in the cascaded topology. Use of the separate charger may allow the inverter to power critical loads even when the internal battery packs are being charged. The charger may charge the various packs simultaneously while relying on smart disconnect switches to disconnect battery packs that have already achieved close to full state of charge (SOC).

According to a number of embodiments disclosed herein, a cascaded inverter battery charging scheme uses Pulse Amplitude Modulation ("PAM") (e.g., a PAM inverter) and may reduce the stresses on the second stage of power conversion or significantly modify this stage to reduce the overall VA rating of the power converter. Furthermore, a second stage used in accordance with some embodiments disclosed herein may include multiple power windings to satisfy the needs of numerous battery packs used in a cascaded inverter topology. The disclosed cascaded inverter may also be configured to adaptively modify the number of windings in a power winding according to battery pack charging needs.

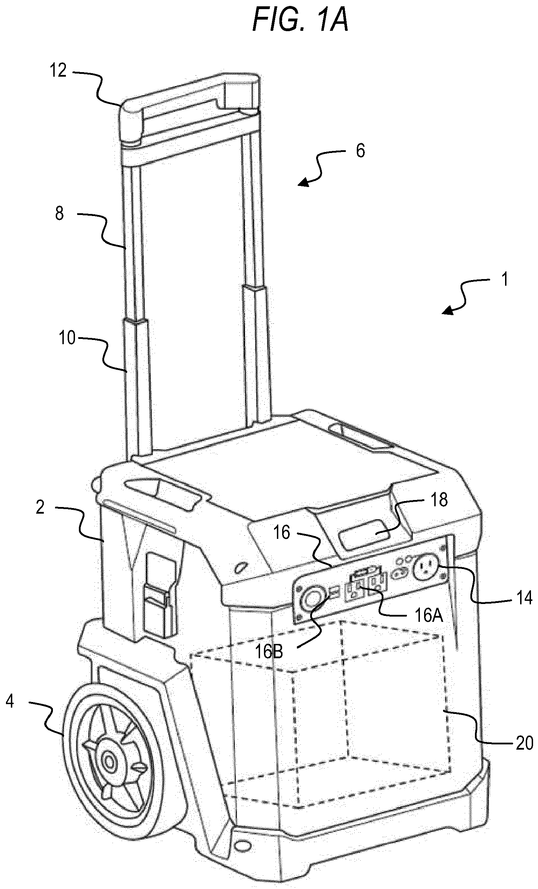

FIG. 1A illustrates a portable power supply device or power supply 1. The power supply 1 includes, among other things, a housing 2. In some embodiments, the housing 2 includes one or more wheels 4 and a handle assembly 6. In the illustrated embodiment, the handle assembly 6 is a telescoping handle movable between an extended position and a collapsed position. The handle assembly 6 includes an inner tube 8 and an outer tube 10. The inner tube 8 fits inside the outer tube 10 and is slidable relative to the outer tube 10. The inner tube 8 is coupled to a horizontal holding member 12. In some embodiments, the handle assembly 6 further includes a locking mechanism to prevent inner tube 8 from moving relative to the outer tube 10 by accident. The locking mechanism may include notches, sliding catch pins, or another suitable locking mechanism to inhibit the inner tube 8 from sliding relative to the outer tube 10 when the handle assembly 6 is in the extended position and/or in the collapsed position. In practice, a user holds the holding member 12 and pulls upward to extend the handle assembly 6. The inner tube 8 slides relative to the outer tube 10 until the handle assembly 6 locks in the extended position. The user may then pull and direct the power supply 1 by the handle assembly 6 to a desired location. The wheels 4 of the power supply 1 facilitate such movement.

The housing 2 of power supply 1 further includes a power input unit 14, a power output unit 16, and a display 18. In the illustrated embodiment, the power input unit 14 includes multiple electrical connection interfaces configured to receive power from an external power source. In some embodiments, the external power source is a DC power source. For example, the DC power source may be one or more photovoltaic cells (e.g., a solar panel), an electric vehicle (EV) charging station, or any other DC power source. In some embodiments, the external power source is an AC power source. For example, the AC power source may be a conventional wall outlet, such as a 120 V outlet or a 240 V outlet, found in North America. As another example, the AC power source may be a conventional wall outlet, such as a 220V outlet or 230V outlet, found outside of North America. In some embodiments, the power input unit 14 is replaced by or additionally includes a cable configured to plug into a conventional wall outlet. In some embodiments, the power input unit 14 further includes one or more devices, such as antennas or induction coils, configured to wirelessly receive power from an external power source. The power received by the power input unit 14 may be used to charge a core battery, or internal power source 20, disposed within the housing 2 of power supply 1.

The power received by the power input unit 14 may also be used to provide power to one or more devices connected to the power output unit 16. The power output unit 16 includes one more power outlets. In the illustrated embodiment, the power output unit 16 includes a plurality of AC power outlets 16A and DC power outlets 16B. It should be understood that number of power outlets included in the power output unit 16 is not limited to the power outlets illustrated in FIG. 1A. For example, in some embodiments of the power supply 1, the power output unit 16 may include more or fewer power outlets than the power outlets included in the illustrated embodiment of power supply 1.

In some embodiments, the power output unit 16 is configured to provide power output by the internal power source 20 to one or more peripheral devices. In some embodiments, the power output unit 16 is configured to provide power provided by an external power source directly to one or more peripheral devices. The one or more peripheral devices may be a smartphone, a tablet computer, a laptop computer, a portable music player, a power tool, a power tool battery pack, a power tool battery pack charger, or the like. The peripheral devices may be configured to receive DC and/or AC power from the power output unit 16.

In some embodiments, the DC power outlets 16B include one or more receptacles for receiving and charging power tool battery packs. In such embodiments, power tool battery packs received by, or connected to, the battery pack receptacles 16B are charged with power output by the internal power source 20 and/or power received directly from the external power source. In some embodiments, power tool battery packs connected to the battery pack receptacles 16B are used to provide power to the internal power source 20 and/or one or more peripheral devices connected to outlets of the power output unit 16. In some embodiments, the power output unit 16 includes tool-specific power outlets. For example, the power output unit may include a DC power outlet used for powering a welding tool.

The display 18 is configured to indicate a state of the power supply 1 to a user, such as state of charge of the internal power source 20 and/or fault conditions. In some embodiments the display 18 includes one or more light-emitting diode ("LED") indicators configured to illuminate and display a current state of charge of internal power source 20. In some embodiments, the display 18 is, for example, a liquid crystal display ("LCD"), a light-emitting diode ("LED") display, an organic LED ("OLED") display, an electroluminescent display ("ELD"), a surface-conduction electron-emitter display ("SED"), a field emission display ("FED"), a thin-film transistor ("TFT") LCD, etc. In other embodiments, the power supply 1 does not include a display.

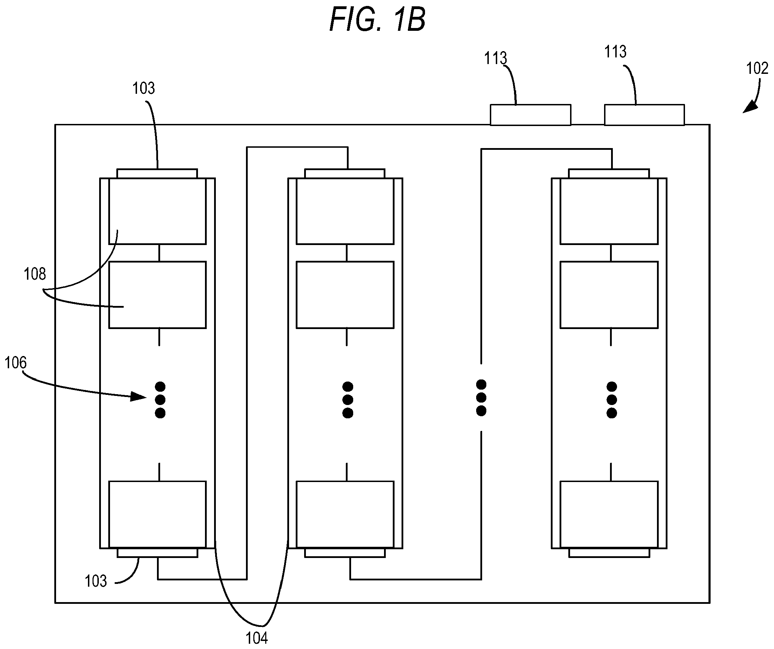

Referring now to FIG. 1B, a battery pack 102 according to a number of embodiments is shown. The battery pack includes a plurality of batteries 104 connected in series. The plurality of batteries may vary in quantity from application to application (illustrated in FIG. 1B as an ellipses 106). For example, the battery pack 102 may include 4 batteries, 5 batteries, 10 batteries, etc., connected in series via their terminals 103. Each of the batteries 104 may include a plurality of cells 108. The plurality of cells 108 may vary from application to application (illustrated in FIG.1B as an ellipses 106). For example, each battery 104 may include 10 cells, 12 cells, 20 cells, etc. The battery pack 102 also includes terminals 113 configured to deliver current to a load (not shown) via a conductor when connected to the load via the conductor.

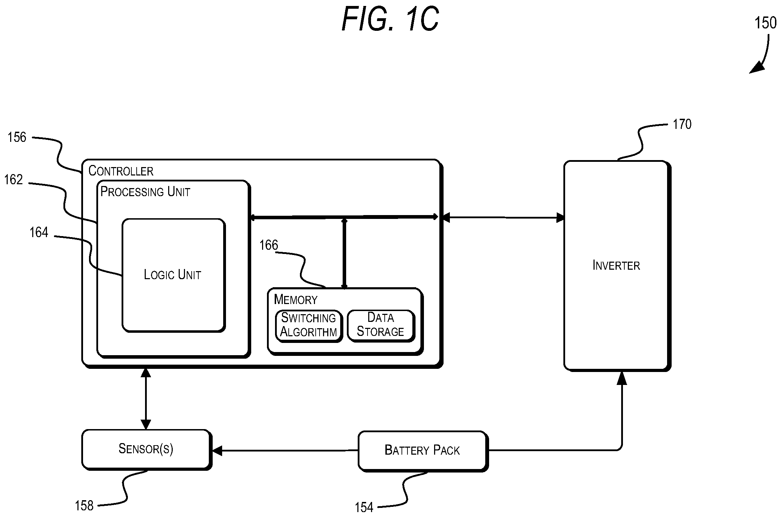

FIG. 1C shows a hardware schematic 150 for the power supply 100 including an inverter 170 connected to a battery pack 154 and a controller 156. The battery pack 154 is connected to sensors 158. The sensors 158 are configured to sense an electrical characteristic of the battery pack 154 (e.g., voltage across the terminals of the battery pack 154, current output of the battery pack 154, the voltage across the terminals of a cell 108 of the battery pack 154, etc.). The controller 156 includes a processing unit 162 that includes a logic unit 164. The controller 156 also includes a memory 166 configured to store programs (e.g., a switching logic program) and data (e.g., data from the sensors 158). The controller 156 is configured to obtain electrical characteristics of the battery pack 154 (e.g., quiescent or during discharge) via the sensors 158, and evaluate the electrical characteristics by executing a switching logic program using the logic unit 164. The controller 156 is further configured to communicate control signals to the inverter 170.

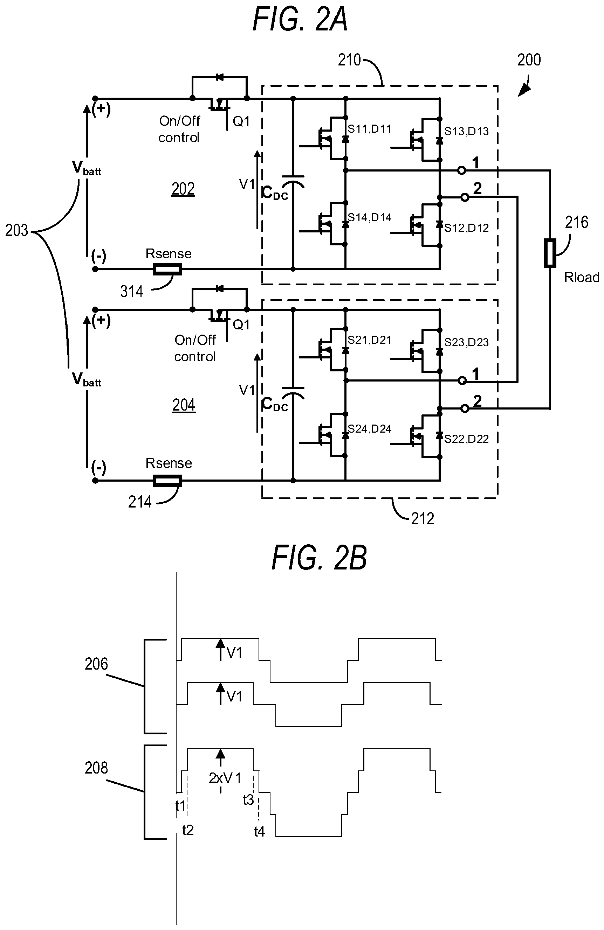

Referring now to FIGS. 2A-2D, a cascade inverter 200 with a first stage 202 and a second stage 204 and independent battery packs 203 is shown in FIG. 2A. A gating scheme 206 along with an output voltage waveform 208 for this topology is shown in FIG. 2B. By altering the duty cycle of each inverter bridge 210, 212, the output voltage waveform 208 may be made to have steps. The duty cycle is circulated to equalize thermal loading and still meet any existing output voltage requirements. A current sense resistor 214 is used to alter the duty cycle of the switches S11, S12, S13, S14, S21, S22, S23, S24 to meet the voltage and current needs dictated by the load 216. It also is used for protection purposes, and if there is an over current condition, the module can be turned OFF by turning off FET Q1 in FIG. 2A. Additional hardware protection in the form of a fuse (not shown) can be used in the DC bus connecting the battery pack 203 to the cascade inverter 200. As can be seen in FIG. 2B, this scheme facilitates the inversion of a DC input current to produce an approximate AC current waveform to power a load 216.

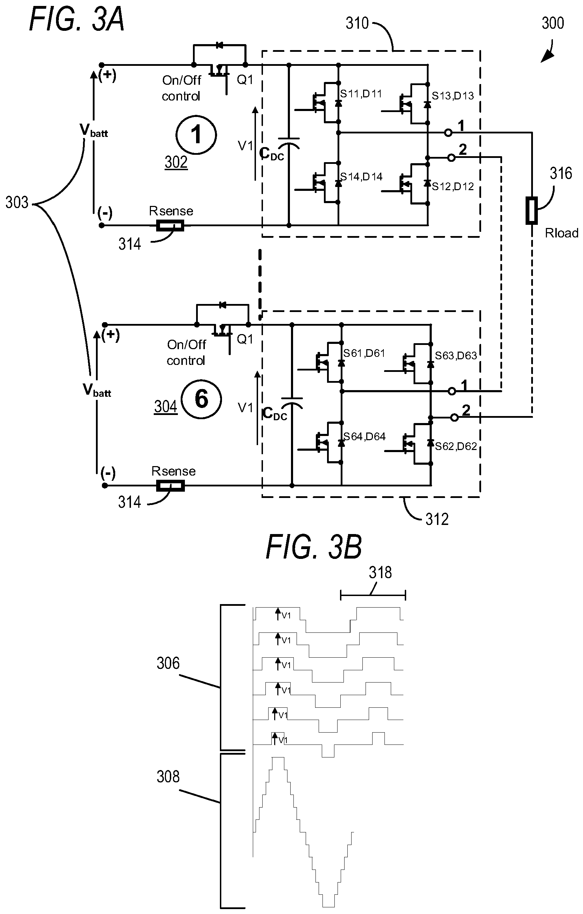

Referring now to FIGS. 3A-3B, a cascaded inverter 300 with six stages 302-304 is shown. An output waveform 308 for a gating scheme 306 in FIG. 3B with pulse width equalization over a certain period may be used to achieve thermal balance and simultaneously satisfy any existing output voltage requirement. The output voltage waveform 308 may be made to have steps by altering the duty cycle of each inverter bridge 310-312. By altering the pulse widths 318, a more staircase type output voltage waveform 308 is achievable as shown in FIG, 3B. If the gating scheme 306 as shown in FIG. 3B is maintained for all time, then unequal thermal stress across each inverter section 310-312 in the cascaded structure may result. To balance out the thermal stresses, the gating scheme 306 may be circulated among the inverter sections 310-312. By doing this, the inverter with the lowest duty cycle may, at a different time, have a longer duty cycle.

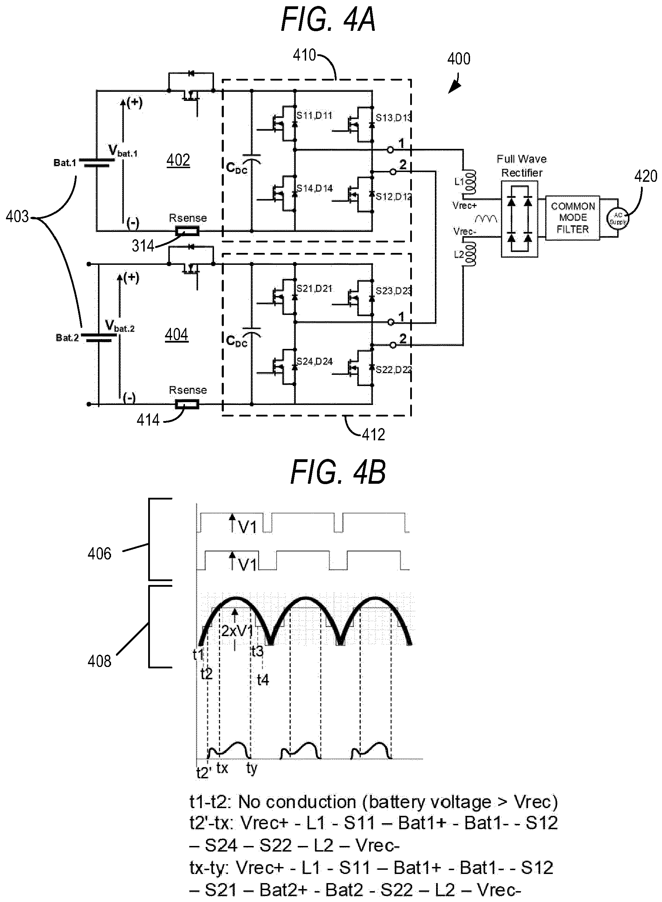

Referring now to FIGS. 4A and 4B, a charging scheme for a two-stage cascaded topology 400 including a top inverter stage 402 and a bottom inverter stage 404 is shown in FIG. 4A, and its corresponding gating 406 is shown in FIG. 4B. When the instantaneous rectified voltage of the source 420 is lower than the pre-existing voltage of the battery pack 403, then no current flows out since the rectifier diodes D11, D12, D13, D14, D21, D22, D23, D24 block this path. However, when the rectified voltage of the source 420 is higher than the voltage of the battery pack 403, then current flows into the battery pack 403. In the first instant, the charging current flows only through the top inverter stage 402. The current path is as follows: Vrec+ - L1 - S11 - Bat1+ - Ball- - S12 - S24 - S22 (D22) - L2 - Vrec-. The lower inverter stage 404 is bypassed during this portion of charging. In the second instant, the charging current flows through both the top inverter stage 402 and the bottom inverter stage 404. During this time, the instantaneous rectified voltage may be higher, the current into the battery pack 403 may be controlled so as not to exceed a prespecified ripple maximum value. The current path during the second instant of conduction is: Vrec+ - L1 - S11 - Bat1+ - Ball- - S12 - S21 - Bat2+ - Bat2- - S22 (D22) - L2 - Vrec-. As mentioned, the average value of this current can be controlled by controlling the duty cycle of the switches S11, S 12, S 13, S14, S21, S22, S23, S24 being used to conduct power to the battery pack 403.

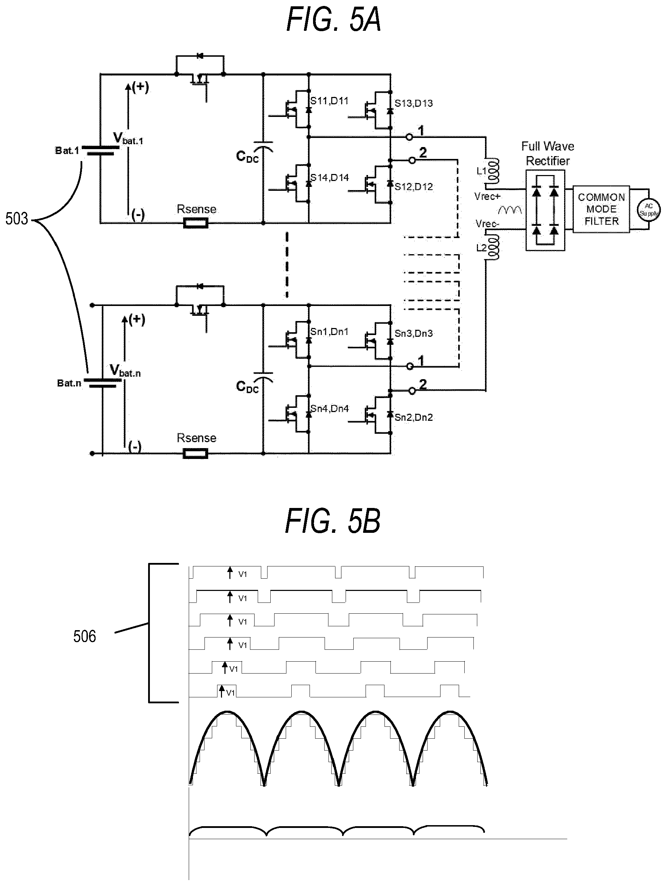

When the number of voltage levels is low as shown in FIG. 4B, the input current may be pulsating. However, if the number of cascade stages is increased, the current may be distributed throughout the entire cycle thereby resulting in a lower current harmonic distortion and higher power factor operation. This scenario may be addressed using the charging scheme for a six-stage cascade topology shown in FIG. 5A. The corresponding charging gating scheme for the cascade inverter of FIG. 5A is shown in FIG. 5B.

In the embodiments shown in FIG. 4A and FIG. 5A the inverter terminals 5, 7 are used to transport power from the AC source to the individual battery packs 403, 503. Therefore, the inverter terminals 5, 7 are unavailable to support a load. If there is a market need to allow customers to connect a load across the inverter terminals 5, 7 when the battery pack 403, 503 is being charged, then the traditional charging scheme will not be able to support this desired need. In some embodiments, the individual battery packs 403, 503 are charged independent of the inverter terminals 5, 7 so that the inverter terminals 5, 7 are available for use to support critical loads when the battery pack 403, 503 is being charged.

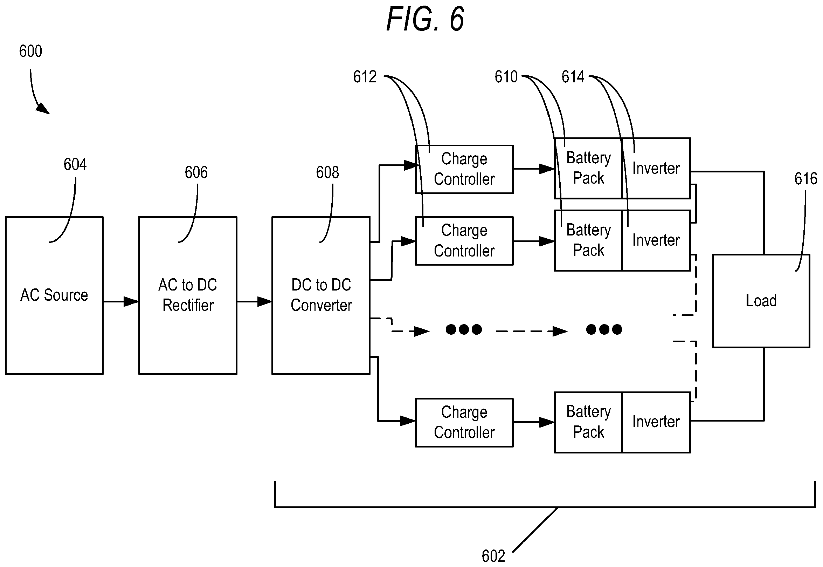

Referring now to FIG. 6, a hardware schematic 600 for a cascaded inverter charging scheme 602 according to a number embodiments is shown. An AC source 604 is connected to an AC to DC rectifier 606 and is configured to deliver DC current to a DC to DC converter 608. The DC to DC converter 608 is configured to condition the DC current for charging a plurality of battery packs 610 via a plurality of charge controllers 612. Each battery pack 610 is coupled to a dedicated inverter 614. The inverters 614 are connected in series and configured to power a load 616 while the battery packs 610 are charged via the charge controllers 612.

In some embodiments, a Power Factor Correction ("PFC") converter is used for rectifying the input AC supply to DC with low input current harmonics. In these embodiments, the output of the PFC converter is made to vary in accordance with the state of charge ("SOC") of the battery pack. Since there are multiple independent battery packs in a cascade inverter, the battery pack with the lowest state of charge may be used as a benchmark for the battery pack SOC. This may result in a low DC voltage at the output of the PFC converter, although this value should be greater than or equal to the minimum DC output voltage (175VDC for 120VAC supply and 332VDC for 230VAC supply) for satisfactory PFC operation. The variable DC output voltage from the PFC is then fed into a high frequency ("hf") transformer-based DC to DC converter to level translate and isolate the varying DC voltage. The hf transformer-based DC to DC converter is made to switch at a fixed duty cycle of close to 50% or other optimal operating point when hard switched full bridge or half bridge converter topology is used.

If a resonant converter is used as the preferred topology for the DC-to-DC converter, then the switching frequency of the switches in the DC-to-DC converter may be held constant at an optimal switching frequency. Doing this may help achieve an improved operating efficiency, with a low and manageable EMI footprint, and deterministic values for the EMI filter needed to meet certain industry guidelines.

In the battery charging algorithm, the charging current flowing into the battery pack may be monitored so that accurate control can be provided. In some embodiments, there are many independent battery packs. Similar to the choice of the pack with the lowest SOC for voltage feedback, the same pack with the lowest SOC is used for providing current feedback to ensure optimal controllability.

One notable difference between known charging topologies and the one disclosed herein is that the high frequency ("hf") isolation transformer may have multiple secondary windings to cater to the charging requirements of multiple battery packs. If a cascaded topology has six stages as shown in FIG. 3A, then the secondary of the SMPS transformer disclosed herein may include six independent windings. The battery pack voltage used as a voltage source for the various inverters in the cascaded topology typically have the same amplitude, which allows the independent secondary windings to have the same number of turns. The needed turns ratio is calculated for the lowest pack voltage that it discharges to when it was being used to provide energy to the load. Keeping in the minimum DC voltage needed for proper PFC operation for a given input AC voltage source, the turns-ratio between the primary and secondary voltage for proper operation can be calculated. Table 1 contains example outputs for an embodiment of the disclosed cascaded inverter charging scheme in the North American market and the Rest of the World.

**TABLE 1**

|  | 6S Battery Pack in 120VAC System | 6S Battery Pack in 230VAC System |
|---|---|---|
| Number of cells in series | 6 | 6 |
| Lowest Voltage of cell | 2.5V | 2.5V |
| Voltage-drop across full bridge rectifier diodes | 2V | 2V |
| Voltage-drop across secondary windings of transformer (estimate) | 1V | 1V |
| Secondary voltage needed | (6x2.5V)+2V+1V= 18V | (6x2.5V)+2V+1V= 18V |
| Lowest primary voltage needed to maintain PFC operation for market | 175V (N. America) | 332V (Rest of World) |
| Turns Ratio→Turns Ratio Selected | 175/18= 9.72→10 | 332/18= 18.44→19 |
| PFC output voltage | 10x18= 180V | 19x18= 342V |

(continued)

| | 6S Battery Pack in 120VAC System | 6S Battery Pack in 230VAC System |
|---|---|---|
| At maximum cell voltage, secondary voltage needed | (6x4.2V)+2V+1V= 28.2V | (6x4.2V)+2V+1V= 28.2V |
| Max PFC output voltage at Turns Ratio Selected | 10x28.2V= 282V | 19x28.2V= 535V |

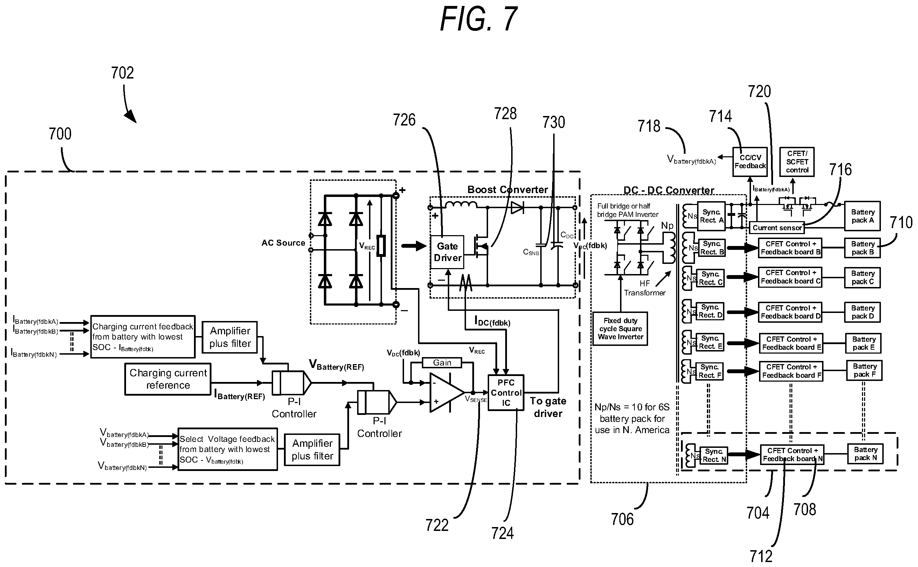

Referring now to FIG. 7, a schematic of a charger 700 for use with the disclosed cascaded inverter charging scheme 702 is shown. Each inverter module 704 in a cascaded converter 706 may have a Battery Management System ("BMS") controller 708 to monitor the state of charge of the battery pack 710 and also to control the charge FET MOSFETs 712. The BMS controller 708 also monitors the temperature of the battery pack 710 and provides protection by turning off the charge FET 712 in case the core temperature exceeds a predefined value. The output from the BMS controller 704 is shown as "CC/CV Feedback" box 714, the output of which is identified as $V_{battery(fdbkA)}$ for battery pack A in FIG. 7. This value is collected for each different battery pack 710 in the cascaded inverter charging scheme 702. Each inverter module 704 in the converter 706 includes a current sensor 716. The output of the current sensor 716 is collected for each battery pack 710. The BMS controller 708 of the inverter module 704 selects the voltage feedback value 718 of the battery pack 710 with the lowest SOC. The current feedback value 720 for the same battery pack 710 with the lowest SOC is considered for controlling a charging profile used by the BMS controllers 708. The voltage feedback value 718 and current feedback value 720 are used in determining the final Vsense 722 value that is fed into a power factor correction ("PFC") controller 724. The output of the PFC controller 724 controls the gate signal that is fed into a Gate driver 726 for the PFC MOSFET 728. The PFC MOSFET 728 in FIG. 7 acts as the PFC power device in this embodiment, but an IGBT or any suitable power semiconductor device could act as the PFC power device in other embodiments.

By selecting the battery pack 710 with the lowest voltage, the system aims to start at the lowest and safest voltage possible. Since the secondary voltage will be the same for all windings because of the same turns-ratio, the battery pack 710 connected to certain secondary windings may not support charging current flow into them since their voltage is higher than the lowest starting voltage based on the lowest SOC of the group. Hence, this method of startup may be the safest method.

As the battery pack 710 with the lowest SOC starts building up charge, its voltage will keep increasing and the controller will keep following it and will increase the output voltage from the PFC converter. Eventually, the secondary voltage can gradually reach levels that will allow charging current to flow into other battery packs 710. At the end of this charging cycle, all battery packs 710 connected to the various secondary windings will have the same voltage and the same SOC. Eventually, the charger 700 enters a constant voltage mode of charging to top off the charge in all the battery packs 710. This will conclude the charging cycle.

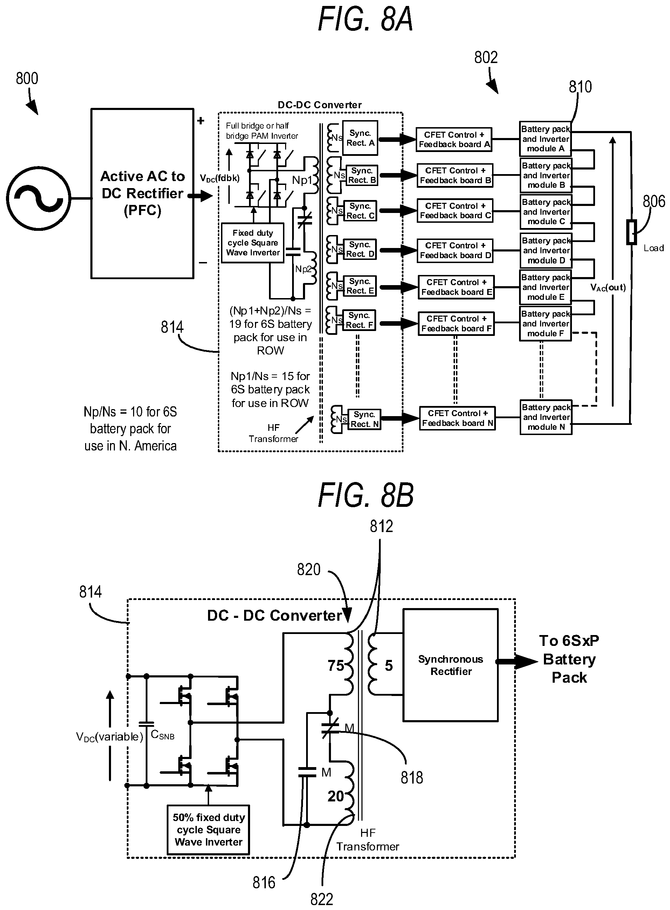

During the charging period, since the inverter terminals are available, some critical load can be connected across it. Depending on the SOC of each battery pack 710 and the overall SOC for the inverter section, the connected load can be supported. A conceptual diagram showing the charging and simultaneous discharging of the battery packs in a cascade topology is shown in FIG. 8A.

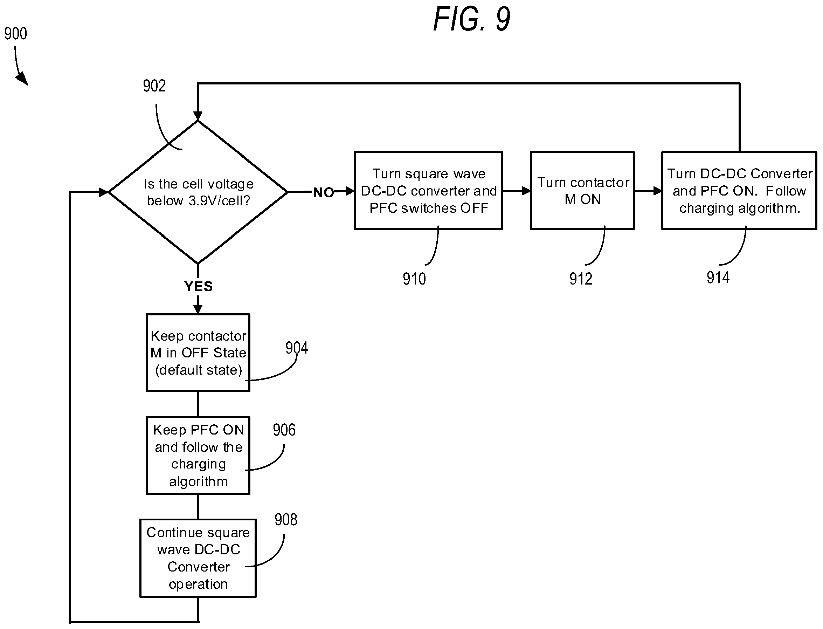

Referring now to FIGS. 8A, 8B, and 9, a schematic 800 is illustrated of a cascaded inverter 802 charging a plurality battery packs 810 while simultaneously supplying power to a load 806 in a 120VAC system. At maximum cell voltage of 4.2V, the secondary voltage needed equals $(6 \times 4.2) + 2 + 1 = 28.2$. With a turns ratio of 10, the output voltage of the PFC converter 728 will go up to 10x28.2= 282V. This voltage is safe for electrolytic capacitors rated at 450V DC.

The above exercise is repeated for a 230V AC system. From Table 1, for a 230V system, the turns ratio chosen is 19. At the maximum cell voltage of 4.2V/cell, and with a turns ratio of 19, the output voltage of the PFC converter 728 will go up to 19x28.2= 536V. This voltage exceeds the recommended output voltage maximum of 450VDC. This suggests that a winding change technique may be employed for a higher voltage system when the packs reach a higher state of charge.

Assuming the maximum safe voltage value of 450V, the maximum voltage of the battery pack 804 for a ratio of 19 is computed to be:

$$V_{Pack} = \frac{450}{19} = 23.68V$$

$$V_{Cell} = \frac{23.68 - 2 - 1}{6} = 3.4V$$

At this point, a winding change may be initiated. The voltage of the battery pack 804 at 3.4V/cell will be 20.4V and adding the voltage drops, the voltage across the secondary windings is 23.4V.

To compute the new turns ratio, the maximum allowable voltage on the primary side high voltage DC bus is assumed to be 425V, which is safe for capacitors rated at 450V DC. The maximum pack voltage at 4.2V/cell is calculated to be 6x4.2= 25.2V. Adding the voltage drop of 2V across the rectifier diodes and the secondary winding voltage drop of 1V, the resultant secondary voltage is calculated to be 25.2+2+1= 28.2V. For a comfortable DC bus voltage of 425V, the ratio should be:

$$n = \frac{425}{28.2} = 15.0$$

In other words, the turns ratio should be reduced from 19 to 15. With a turns ratio of 15, the highest output voltage of the PFC converter 728 will go up to is 15x28.2= 423V, which is safe for electrolytic capacitors rated at 450V DC.

When the battery pack 810 voltage is at 3.4V/cell and is increasing, the change to the windings 812 is initiated. The turns ratio is changed from 19 to 15 using contactor arrangement as shown in FIG. 8B. At the time of transition, the input PFC MOSFET 728 is disabled and so is the switching of the DC-to-DC converter 814. In some embodiments, a bleed resistor is across the DC bus capacitors 730 of the PFC MOSFET 728, which will start bleeding off the high voltage across the DC bus capacitors 730. A contactor arrangement made up of a normally closed contactor 818 and a normally open contactor 816 is provided across one section of the primary winding 820. Contactor M is closed by energizing its coil. When the normally closed contactor 816 is turned ON, the 19-turn portion (95:5 ratio) of the primary winding 820 disconnects, and the 15-turn portion (75:5 ratio) connects to the DC-to-DC converter output terminal.

Referring now to FIG. 9, a flow diagram 900 for a control algorithm configured to ensure that the contactor 816 is operated correctly depending on the measured pack voltage is shown. After the contactor operation is accomplished, the gate signals to the PFC and the DC-to-DC converter are enabled and normal operation is restored. The battery pack starts getting charged from its present state of 3.9V/cell to 4.2V/cell following the normal charging process.

At block 902, the charger senses a cell voltage of a battery pack and determines whether the battery pack voltage is below 3.9 volts per cell. If YES, logic flow moves towards block 904. At block 904, the charger keeps the normally closed contactor 818 in an OFF state, which is also the default state and the turns ratio is 19:1. At block 906, the charger keeps the PFC ON. At block 908, the charger charges the battery pack using the converter.

If the pack voltage is above 3.9V/cell, the logic moves towards block 910. At block 910, square wave DC-DC converter and the PFC switches are turned OFF. At block 912, the charger turns the normally open contactor 816 ON, which also opens normally closed contactor 818. This changes the turns ratio to 15:1. At block 914, the charger turns the converter and the PFC ON, and continues charging the battery pack.

REPRESENTATIVE FEATURES

Representative features are set out in the following clauses, which stand alone or may be combined, in any combination, with one or more features disclosed in the text and/or drawings of the specification.

1. A power supply comprising:

a rectifier;
a converter connected to the rectifier;
a plurality of battery management system controllers connected to the converter and configured to connect to a plurality of battery packs, each battery pack configured to be connected to a dedicated battery management system controller; and
a plurality of inverters configured to connect to the plurality of battery packs, each inverter configured to connect to one of the plurality of battery packs,
wherein a first inverter and a last inverter provide terminals configured to connect to a load and power the load while the plurality of battery packs are being charged by the battery management system controllers.

2. The power supply of clause 1, wherein the converter includes a high frequency ("HF") isolation transformer, the HF isolation transformer including multiple secondary windings to accommodate charging requirements of a plurality of battery packs.

3. The power supply of clause 2, wherein the converter is configured to determine a voltage need of at least one of the plurality of battery packs and increase or decrease a number of turns in a primary winding of the HF isolation transformer of the converter based on the voltage need.

4. The power supply of any of clauses 1-3, wherein the plurality of battery management system controllers are configured to determine a lowest charge battery pack from the plurality of battery packs having a lowest state of charge and to begin a cascaded charge at the lowest charge battery pack.

5. The power supply of any of clauses 1-4, further including a boost converter connected to the converter.

6. The power supply of any of clauses 1-5, wherein the converter includes a pulse amplitude modulation inverter.

7. The power supply of any of clauses 1-6, wherein the plurality of inverters include two or more stages.

8. A portable power supply comprising:

    a housing;
    a rectifier;
    a converter connected to the rectifier;
    a plurality of battery management system controllers connected to the converter and configured to connect to a plurality of battery packs, each battery pack configured to be connected to a dedicated battery management system controller;
    a plurality of inverters configured to connect to the plurality of battery packs, each inverter configured to connect to one of the plurality of battery packs; and,
    a power outlet,
    wherein a first inverter and a last inverter of the plurality of inverters provide terminals connected to the power outlet.

9. The portable power supply of clause 8, wherein the converter includes a high frequency ("HF") isolation transformer, the HF isolation transformer including multiple secondary windings to accommodate charging requirements of a plurality of battery packs.

10. The portable power supply of clause 9, wherein the converter is configured to determine a voltage need of at least one of the plurality of battery packs and increase or decrease a number of turns in a primary winding of the HF isolation transformer of the converter based on the voltage need.

11. The portable power supply of any of clauses 8-10, wherein the plurality of battery management system controllers are configured to determine a lowest charge battery pack from the plurality of battery packs having a lowest state of charge and to begin a cascaded charge at the lowest charge battery pack.

12. The portable power supply of any of clauses 8-11, further comprising:
a boost converter connected to the converter.

13. The portable power supply of any of clauses 8-12, wherein the converter includes a pulse amplitude modulation inverter.

14. The portable power supply of any of clauses 8-13, wherein the plurality of inverters include two or more stages.

15. A cascaded inverter comprising:

    a plurality of inverters configured to connect to a plurality of battery packs, each inverter configured to connect to one of the plurality of battery packs,
    wherein a first inverter and a last inverter of the plurality of inverters provide terminals configured to connect to a load and power the load while the plurality of battery packs are being charged via the plurality of inverters.

16. The cascaded inverter of clause 15, wherein the cascaded inverter is configured to accommodate various charging requirements via a converter including a high frequency ("HF") isolation transformer having multiple secondary windings.

17. The cascaded inverter of any of clauses 15-16, wherein the cascaded inverter is configured to begin a cascaded charge at a lowest charge battery pack from the plurality of battery packs.

18. The cascaded inverter of any of clauses 15-17, wherein the cascaded inverter is configured to charge each of the plurality of battery packs to the same state of charge.

19. The cascaded inverter of any of clauses 15-18, wherein the plurality of inverters is configured to be paired with a plurality of charge controllers, each inverter configured to connect to one of the plurality of charge controllers.

20. The cascaded inverter of any of clauses 15-19, wherein the cascaded inverter includes two or more stages.

21. A power supply comprising:

a rectifier;
a plurality of battery management system controllers configured to connect to a plurality of battery packs, each battery pack configured to be connected to a dedicated battery management system controller,
a converter connected to the rectifier and the battery management system controllers, and configured to transmit power from the rectifier to the battery management system controllers via a high frequency ("HF") isolation transformer,
wherein the converter is configured to adaptively adjust an initial windings ratio of the HF isolation transformer while charging the plurality of battery packs based on a voltage of a lowest voltage battery pack connected to at least one of the plurality of battery management system controllers.

22. The power supply of clause 21, wherein an initial windings ratio of the HF isolation transformer is given by a ratio of a plurality of primary windings to a plurality of secondary windings of the HF isolation transformer and is set based upon a lowest primary voltage need of a market of operation.

23. The power supply of any of clauses 21-22, wherein adaptively adjusting the initial windings ratio of the HF transformer includes shorting out a portion of a plurality of the primary windings of the HF isolation transformer.

24. The power supply of any of clauses 21-23, wherein shorting out a portion of the plurality of primary windings of the HF isolation transformer includes closing a bypass contactor.

25. The power supply of any of clauses 21-23, wherein shorting out a portion of the plurality of primary windings of the HF isolation transformer includes opening a bypass contactor.

26. The power supply of any of clauses 21-26, wherein closing the bypass contactor is closed when a voltage of the lowest voltage battery pack rises above 3.9 volts per cell.

27. A method of adaptively charging a plurality of battery pack comprising:

connecting the plurality of battery packs to a rectifier via a plurality of battery management system controllers; transmitting, via a high frequency ("HF") isolation transformer of a converter, power from the rectifier to the battery management system controllers; and,
adaptively adjusting, via the converter, an initial windings ratio of the HF isolation transformer while charging the plurality of battery packs based on a voltage of a lowest voltage battery pack connected to at least one of the plurality of battery management system controllers such that a the lowest voltage battery pack charges before other battery packs in the plurality of battery packs.

28. The method of clause 27, wherein the initial windings ratio of the HF isolation transformer is given by a ratio of a plurality of primary windings to a plurality of secondary winding of the HF isolation transformer and is set based upon a lowest primary voltage need of a market of operation.

29. The method of any of clauses 27-28, wherein adaptively adjusting the initial windings ratio of the HF transformer includes shorting out a portion of a plurality of the primary windings of the HF isolation transformer.

30. The method of any of clauses 27-29, wherein the initial windings ratio is at least 95:5.

31. The method of any of clauses 29-30, wherein shorting out a portion of the plurality of the primary windings produces an adjusted windings ratio of 75:5.

32. The method of any of clauses 29-31, wherein shorting out a portion of the plurality of primary windings of the HF isolation transformer includes closing a bypass contactor.

33. The method of any of clauses 29-31, wherein shorting out a portion of the plurality of primary windings of the HF isolation transformer includes opening a bypass contactor.

34. The method of any of clauses 29-33, wherein shorting out of the portion of the plurality of primary windings occurs when a voltage of the lowest voltage battery pack rises above a threshold.

Thus, embodiments described herein provide, among other things, a cascaded inverter configured to charge a plurality of batteries in a balanced fashion while simultaneously powering a load. Various features and advantages are set forth in the following claims.


**Claims**

1.   A power supply comprising:

a rectifier;
a converter connected to the rectifier;
a plurality of battery management system controllers connected to the converter and configured to connect to a plurality of battery packs, each battery pack configured to be connected to a dedicated battery management system controller; and
a plurality of inverters configured to connect to the plurality of battery packs, each inverter configured to connect to one of the plurality of battery packs,
wherein a first inverter and a last inverter provide terminals configured to connect to a load and power the load while the plurality of battery packs are being charged by the battery management system controllers.

2.   The power supply of claim 1, wherein the converter includes a high frequency ("HF") isolation transformer, the HF isolation transformer including multiple secondary windings to accommodate charging requirements of a plurality of battery packs.

3.   The power supply of claim 2, wherein the converter is configured to determine a voltage need of at least one of the plurality of battery packs and increase or decrease a number of turns in a primary winding of the HF isolation transformer of the converter based on the voltage need.

4.   The power supply of claim 1, wherein the plurality of battery management system controllers are configured to determine a lowest charge battery pack from the plurality of battery packs having a lowest state of charge and to begin a cascaded charge at the lowest charge battery pack.

5.   The power supply of claim 1, further including a boost converter connected to the converter.

6.   The power supply of claim 1, wherein the converter includes a pulse amplitude modulation inverter.

7.   The power supply of claim 1, wherein the plurality of inverters include two or more stages.

8.   A method of adaptively charging a plurality of battery packs comprising:

connecting the plurality of battery packs to a rectifier via a plurality of battery management system controllers;
transmitting, via a high frequency ("HF") isolation transformer of a converter, power from the rectifier to the battery management system controllers; and,
adaptively adjusting, via the converter, an initial windings ratio of the HF isolation transformer while charging the plurality of battery packs based on a voltage of a lowest voltage battery pack connected to at least one of the plurality of battery management system controllers such that a the lowest voltage battery pack charges before other battery packs in the plurality of battery packs.

9. The method of claim 8, wherein the initial windings ratio of the HF isolation transformer is given by a ratio of a plurality of primary windings to a plurality of secondary winding of the HF isolation transformer and is set based upon a lowest primary voltage need of a market of operation.

10. The method of claim 9, wherein adaptively adjusting the initial windings ratio of the HF transformer includes shorting out a portion of a plurality of the primary windings of the HF isolation transformer.

11. The method of claim 10, wherein the initial windings ratio is at least 95:5.

12. The method of claim 11, wherein shorting out a portion of the plurality of the primary windings produces an adjusted windings ratio of at least 75:5.

13. The method of claim 10, wherein shorting out a portion of the plurality of primary windings of the HF isolation transformer includes closing a bypass contactor.

14. The method of claim 10, wherein shorting out a portion of the plurality of primary windings of the HF isolation transformer includes opening a bypass contactor.

15. The method of claim 14, wherein shorting out of the portion of the plurality of primary windings occurs when a voltage of the lowest voltage battery pack rises above a threshold.

# FIG. 1A

FIG. 1B

FIG. 1C

150

156

CONTROLLER

162

PROCESSING UNIT

164

LOGIC UNIT

166

MEMORY

SWITCHING ALGORITHM

DATA STORAGE

170

INVERTER

SENSOR(S)

158

BATTERY PACK

154

EP 4 304 074 A1

## FIG. 2A

## FIG. 2B

FIG. 3A

FIG. 3B

## FIG. 4A

## FIG. 4B

t1-t2: No conduction (battery voltage > Vrec)
t2'-tx: Vrec+ - L1 - S11 – Bat1+ - Bat1- - S12
– S24 – S22 – L2 – Vrec-
tx-ty: Vrec+ - L1 - S11 – Bat1+ - Bat1- - S12
– S21 – Bat2+ - Bat2 - S22 – L2 – Vrec-

## FIG. 5A

## FIG. 5B

FIG. 6

EP 4 304 074 A1

FIG. 7

## FIG. 8A

800

802

810

**Active AC to DC Rectifier (PFC)**

+

$V_{DC}$(fdbk)

−

DC-DC Converter

Full bridge or half bridge PAM Inverter

Np1

Fixed duty cycle Square Wave Inverter

Np2

814

(Np1+Np2)/Ns = 19 for 6S battery pack for use in ROW

Np1/Ns = 15 for 6S battery pack for use in ROW

Np/Ns = 10 for 6S battery pack for use in N. America

HF Transformer

Ns — Sync. Rect. A — CFET Control + Feedback board A — Battery pack and Inverter module A

Ns — Sync. Rect. B — CFET Control + Feedback board B — Battery pack and Inverter module B

Ns — Sync. Rect. C — CFET Control + Feedback board C — Battery pack and Inverter module C

Ns — Sync. Rect. D — CFET Control + Feedback board D — Battery pack and Inverter module D

Ns — Sync. Rect. E — CFET Control + Feedback board E — Battery pack and Inverter module E

Ns — Sync. Rect. F — CFET Control + Feedback board F — Battery pack and Inverter module F

Ns — Sync. Rect. N — CFET Control + Feedback board N — Battery pack and Inverter module N

$V_{AC}$(out)

806

Load

## FIG. 8B

812

820

814

**DC - DC Converter**

$V_{DC}$(variable)

$C_{SNB}$

50% fixed duty cycle Square Wave Inverter

75

5

M

M

20

**Synchronous Rectifier**

**To 6SxP Battery Pack**

818

HF Transformer

816

822

# FIG. 9

900

902 — Is the cell voltage below 3.9V/cell?

NO → Turn square wave DC-DC converter and PFC switches OFF (910) → Turn contactor M ON (912) → Turn DC-DC Converter and PFC ON. Follow charging algorithm. (914)

YES ↓

Keep contactor M in OFF State (default state) — 904

Keep PFC ON and follow the charging algorithm — 906

Continue square wave DC-DC Converter operation — 908

EP 4 304 074 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | EP 3 522 356 A2 (SUNGROW POWER SUPPLY CO LTD [CN]) 7 August 2019 (2019-08-07)<br>* abstract *<br>* figures *<br>* paragraph [0022] *<br>----- | 1,2,5<br>3,4,6,7<br>8-15 | INV.<br>H02M7/49<br>H02M7/501<br>H02J1/08<br>H02J7/04 |
| Y<br>A | WO 2019/170781 A1 (NPC TECH APS [DK]) 12 September 2019 (2019-09-12)<br>* abstract *<br>* figures 4A, 5A, 5B *<br>----- | 3,8<br>9-15 | |
| Y<br>A | US 2022/102986 A1 (SAHOO ASHISH K [US] ET AL) 31 March 2022 (2022-03-31)<br>* abstract *<br>* figures *<br>* paragraphs [0027], [0030] *<br>----- | 4,6-8<br>1-3,5,<br>9-15 | |
| A | WO 2020/041904 A1 (GOVERNING COUNCIL UNIV TORONTO [CA] ET AL.) 5 March 2020 (2020-03-05)<br>* abstract *<br>* figures 2,3,8-13,22,23 *<br>----- | 1-15 | |
| A | WO 2022/006737 A1 (HUAWEI DIGITAL POWER TECHNOLOGIES CO LTD) 13 January 2022 (2022-01-13)<br>& EP 4 170 887 A1 (HUAWEI DIGITAL POWER TECH CO LTD [CN]) 26 April 2023 (2023-04-26)<br>* abstract *<br>* paragraph [0082] - paragraph [0093] *<br>-----<br>-/-- | 1-15 | TECHNICAL FIELDS<br>SEARCHED (IPC)<br><br>H02J<br>H02M |

The present search report has been drawn up for all claims

| Place of search | Date of completion of the search | Examiner |
|---|---|---|
| Munich | 29 November 2023 | Hurtado-Albir, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 17 6517

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ISLAM MD RABIUL ET AL: "A Multilevel Medium-Voltage Inverter for Step-Up-Transformer-Less Grid Connection of Photovoltaic Power Plants", IEEE JOURNAL OF PHOTOVOLTAICS, IEEE, vol. 4, no. 3, 1 May 2014 (2014-05-01), pages 881-889, XP011545892, ISSN: 2156-3381, DOI: 10.1109/JPHOTOV.2014.2310295 [retrieved on 2014-04-17] * abstract * * figures 2,3 * | 1-15 | |

TECHNICAL FIELDS
SEARCHED     (IPC)

The present search report has been drawn up for all claims

| Place of search | Date of completion of the search | Examiner |
|---|---|---|
| Munich | 29 November 2023 | Hurtado-Albir, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 17 6517

This annex lists the patent family members relating to the patent documents cited in  the above-mentioned European search report.
The members are as contained in the European Patent Office EDP file on
The European Patent Office is in no way liable for these particulars which are merely given for the purpose of information.

29-11-2023

| Patent document cited in search report | | Publication date | Patent family member(s) | | Publication date |
|---|---|---|---|---|---|
| EP 3522356 | A2 | 07-08-2019 | CN | 108111035 A | 01-06-2018 |
| | | | EP | 3522356 A2 | 07-08-2019 |
| | | | JP | 2019134665 A | 08-08-2019 |
| | | | US | 2019238088 A1 | 01-08-2019 |
| WO 2019170781 | A1 | 12-09-2019 | NONE | | |
| US 2022102986 | A1 | 31-03-2022 | US | 2022102986 A1 | 31-03-2022 |
| | | | US | 2023208150 A1 | 29-06-2023 |
| WO 2020041904 | A1 | 05-03-2020 | CA | 3075837 A1 | 05-03-2020 |
| | | | CN | 112739571 A | 30-04-2021 |
| | | | EP | 3844017 A1 | 07-07-2021 |
| | | | JP | 2021536724 A | 27-12-2021 |
| | | | KR | 20210050555 A | 07-05-2021 |
| | | | US | 2021316623 A1 | 14-10-2021 |
| | | | US | 2023234461 A1 | 27-07-2023 |
| | | | WO | 2020041904 A1 | 05-03-2020 |
| WO 2022006737 | A1 | 13-01-2022 | CN | 114223127 A | 22-03-2022 |
| | | | EP | 4170887 A1 | 26-04-2023 |
| | | | US | 2023163675 A1 | 25-05-2023 |
| | | | WO | 2022006737 A1 | 13-01-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63347869
- US 63370750